(19) Europäisches Patentamt / European Patent Office / Office européen des brevets

(11) **EP 2 218 194 B1**

## (12) EUROPEAN PATENT SPECIFICATION

(45) Date of publication and mention
of the grant of the patent:
**04.05.2011 Bulletin 2011/18**

(51) Int Cl.:
**H04B 7/08** (2006.01)   **H04B 7/06** (2006.01)
**H04B 7/04** (2006.01)

(21) Application number: **08792436.1**

(22) Date of filing: **06.08.2008**

(86) International application number:
**PCT/JP2008/064506**

(87) International publication number:
**WO 2009/060650 (14.05.2009 Gazette 2009/20)**

(54) **METHOD FOR SELECTING ANTENNAS IN A SPATIAL DIVISION MULTIPLE ACCESS (SDMA) WIRELESS NETWORK**

VERFAHREN ZUR AUSWAHL VON ANTENNEN IN EINEM DRAHTLOSEN NETZ MIT RAUMMULTIPLEX-MEHRFACHZUGRIFF (SDMA)

PROCEDE DE SELECTION D'ANTENNES DANS UN RESEAU SANS FIL A ACCES MULTIPLE PAR REPARTITION SPATIALE (AMRS)

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.11.2007 US 937883**

(43) Date of publication of application:
**18.08.2010 Bulletin 2010/33**

(73) Proprietor: **Mitsubishi Electric Corporation Tokyo 100-8310 (JP)**
Designated Contracting States:
**AT BE BG CH CY CZ DE DK EE ES FI FR GB GR HR HU IE IS IT LI LT LU LV MC MT NL NO**

(72) Inventors:
• **TAO, Zhifeng**
  **Allston, Massachusetts 02134 (US)**
• **WANG, Tairan**
  **Minneapolis, Minnesota 55414 (US)**
• **MOLISCH, Andreas, F.**
  **Pasadena, CA 91101 (US)**
• **ORLIK, Philip, V.**
  **Cambridge, Massachusetts 02140 (US)**
• **ZHANG, Jinyun**
  **Cambridge, Massachusetts 02141 (US)**

(74) Representative: **Gleiter, Hermann**
**Pfenning, Meinig & Partner GbR**
**Patent- und Rechtsanwälte**
**Theresienhöhe 13**
**80339 München (DE)**

(56) References cited:
**EP-A- 1 392 004**       **WO-A-02/093819**
**US-A1- 2007 224 943**

• **RUNHUA CHEN ET AL: "Transmit selection diversity for multiuser spatial multiplexing systems" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 4, 29 November 2004 (2004-11-29), pages 2625-2629, XP010758001 ISBN: 978-0-7803-8794-2**

**Description**

Technical Field

This invention relates generally to a spatial division multiple access (SDMA), and more particularly to selecting antennas for SDMA transmissions in OFDMA networks.

Background of the Invention

OFDMA

Orthogonal frequency-division multiplexing (OFDM) is a modulation technique used at the physical layer (PHY) of a number of wireless networks, e.g., networks designed according to the well known IEEE 802.11a/g, and IEEE 802.16/16e standards. OFDMA is a multiple access scheme based on OFDM. In OFDMA, separate sets of orthogonal tones (subchannels) and time slots are allocated to multiple transceivers (users or mobile stations) so that the transceivers can communicate concurrently. The IEEE 802.16 standard defines an air interface, while WiMAX includes both the IEEE 802.16 air interface and the networking aspect of the system. Terms and definitions used herein are included in the Appendix.

Antenna Selection

According to the IEEE 802.16 standards, multiple antenna elements and radio frequency (RF) chains can be supported in base stations (BS) and mobile stations (MS). Due to the high cost of RF chains and relatively low cost of antennas, the number of RF chains (N) is usually less than the number of antennas ($M$) at the MS, that is, $N \leq M$.

It is known that each antenna provides a different propagation path that experiences a distinct channel gain. Therefore, it is important to selectively connect a subset $N$ of the $M$ available antennas to $N$ RF chains so that the transmission and reception performance is optimized. This function is known as antenna selection (AS). Antenna selection improves system performance in terms of bit error rate (BER), signal to noise ratio (SNR) and throughput (TH).

Antenna selection at mobile station for non-SDMA transmission in an OFDMA network, where a base station communicates to one mobile station at a time, is described in U.S. Patent Application Sn. 11/777356 publ. number US 2009/0016312A1, "Method and system for selecting antennas adaptively in OFDMA networks," filed by Tao et al on July, 13, 2007. In U.S. Patent Application Sn. 11/777356, however, Tao et al. have not described antenna selection at mobile station for SDMA transmission, where a base station communicates with multiple mobile stations concurrently using a single piece of time and frequency resource. WO 02/093819 discloses a method for antenna selection in a SDMA network according to the preamble of claim 1. US 2007/0224943 discloses antenna selection at both sides of a MIMO-system.

It is desired to provide antenna selection at mobile station for SDMA transmission in an OFDMA network.

Disclosure of Invention

A method selects subsets of antennas at mobile stations for SDMA transmission in an OFDMA network. Furthermore, it is desired that the selected subsets of antennas are globally optimal for the network. A mobile station measures the channels state information (CSI) for a downlink (DL) channel from a base station to the mobile station, and feeds back the CSI to the base station. The base station measures the CSI for the uplink (UL) channel from the mobile station to the base station.

The method determines whether the downlink and the uplink channels are reciprocal based on the CSI of the DL and UL channels. The method also determines whether the antennas are to be selected locally by each mobile station or globally by the base station for SDMA transmissions.

The downlink receive antenna selection at the mobile station can be done by either the mobile station or the base station, depending on the channel reciprocity and the selection criteria. The uplink transmit antenna selection at the mobile station can be determined by the base station.

Brief Description of the Drawings

Figure 1A is a schematic of a wireless cellular network used by embodiments of the invention;
Figure 1B is a block diagram of antenna selection according to embodiments of the invention;
Figure 2 is a block diagram of a frame structure used by embodiments of the invention;
Figure 3 is a schematic of an OFDMA symbol used by embodiments of the invention;
Figure 4 is a detailed block diagram for antenna selection according to embodiments of the invention;
Figure 5A is a block diagram of a DL TUSC1 (UL PUSC) zone according to embodiments of the invention;
Figure 5B is a block diagram of a DL/UL AMC zone according to embodiments of the invention;

Figure 6A is a block diagram of pilot patterns under DL TUSC1 (UL PUSC) permutation according to embodiments of the invention;

Figure 6B is a block diagram of pilot patterns under DL/UL AMC permutation according to embodiments of the invention;

Figure 7A is block diagram of antenna switching for the DL TUSC1 (UL PUSC) zone of Figure 5A;

Figure 7B is block diagram of antenna switching for the DL/UL AMC zone of Figure 5B;

Figure 8 is a flow chart diagram of channel estimation, CQI feedback and scheduling for downlink MS initiated receive antenna selection according to embodiments of the invention;

Figure 9 is a flow diagram of channel estimation, CQI feedback and scheduling for uplink BS initiated transmit antenna selection according to embodiments of the invention;

Figure 10 is a flow chart diagram of channel estimation, CQI feedback and scheduling for BS initiated downlink receive antenna selection according to embodiments of the invention; and

Figure 11 is a flow chart diagram of channel estimation, CQI feedback and scheduling for MS initiated downlink receive antenna selection according to embodiments of the invention.

Best Mode for Carrying Out the Invention

Spatial division multiple access (SDMA)

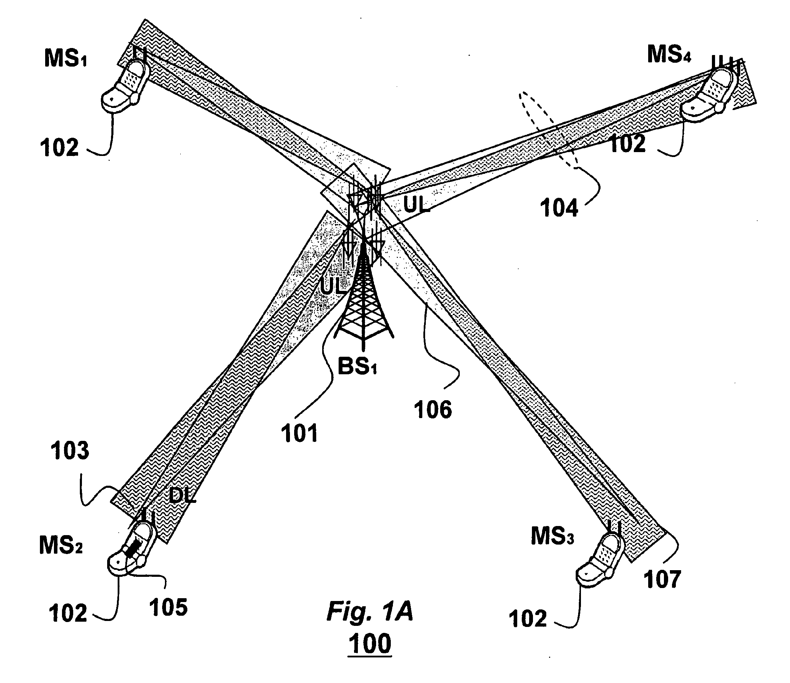

Figure 1A shows a network 100 used by embodiments of our invention. The network includes a base station ($BS_1$) 101, and a set (two or more) of mobile stations ($MS_1$-$MS_4$) 102. Each station includes one or multiple transceivers (RF chains) 105. Each RF chain connects to one antenna 103. A typical base station usually has multiple antennas, while each mobile stations has a set of multiple (one or more) antennas. Wireless channels 104 connect the antennas. Each channel includes an uplink (UL) 106 and downlink (DL) 107.

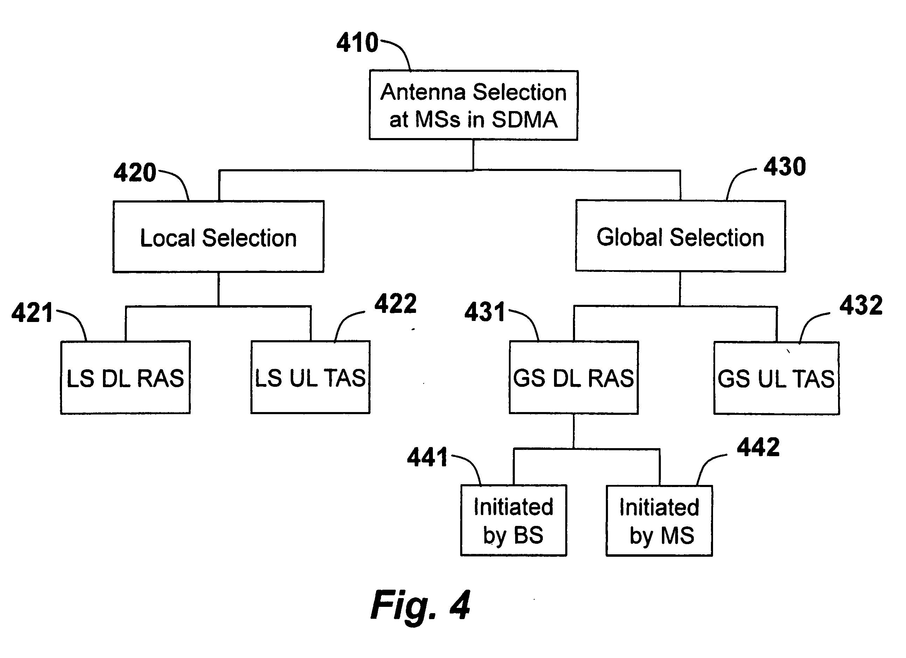

From time to time, antenna selection is performed for selected mobile stations. The designated mobile stations can be one or more of the mobile stations in the set that have more than one antennas. The designated mobile station can be a station that is entering the network, or a mobile station is experiencing a degradation of performance due to its location, and perhaps can improve its channel by having if a different subset of its antennas were used. Either the base station or a mobile station itself can determine whether it should be a designated mobile station for the purpose of antenna selection, see Figure 4 for additional details.

Spatial division multiple access (SDMA) can be achieved by using multiple-input multiple-output (MIMO) techniques with precoding and multi-user scheduling. SDMA exploits information of the locations of the MSs 102 within a cell. With SDMA, the radiation patterns of the RF signals 104 are adapted to obtain a high gain in a particular direction towards the location of the MSs, and low gain in the direction of interferers (other MSs operating on the same resource). This is often called beam forming or beam steering. BSs that support SDMA transmit signals to multiple MSs concurrently using the same resources (e.g., OFDMA symbol and frequency subchannel), but perhaps, directed in different directions. SDMA can increase network capacity, as multiple transmissions can occur in parallel. MSs with multiple antennas can also employ SDMA. The precoding is performed at the BS before downlink transmission, using channel state information (CSI) acquired by the BS through feedback from the MS or obtained based upon channel reciprocity.

In IEEE 802.16e, SDMA can be performed in either AAS or STC zone, under various permutation zones. The related definitions are given in the Appendix.

Frame Structure

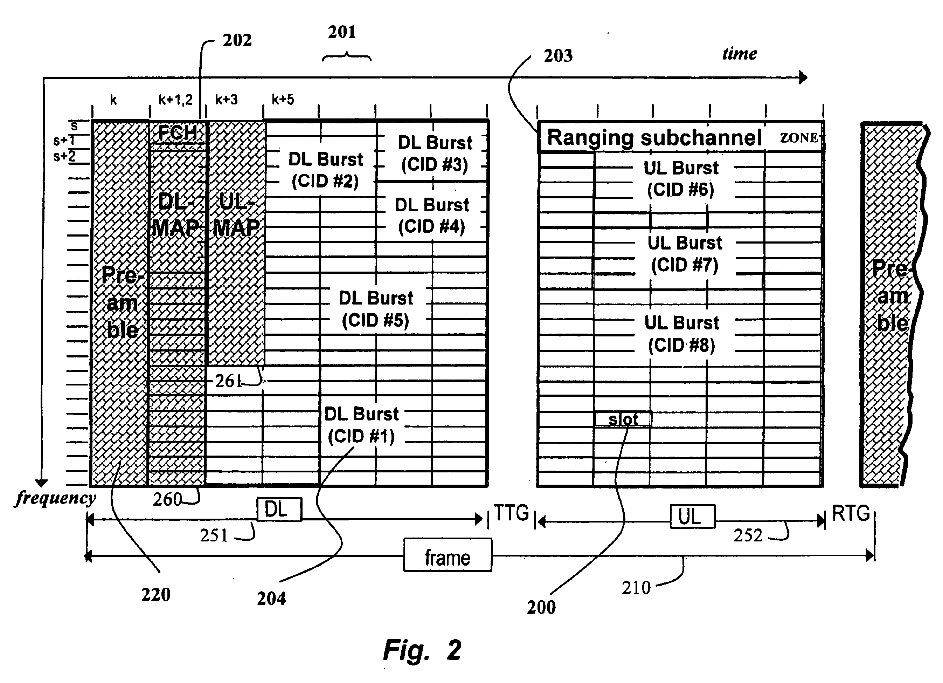

Figure 2 shows a frame structure used for OFDMA channel access by the BS and MS. In Figure 2, the horizontal axis indicates time domain resources, and the vertical axis indicates subchannel (frequency) domain resources.

The basic unit of resource for allocation in OFDMA is a *slot* 200. The size of the slot is based on the permutation modes that the MS and the BS use for transmissions in downlink (DL) and uplink (UL). A permutation mode defines the type of resource allocation in time and frequency domains. Different modes are defined for the downlink and uplink. By using a specific permutation, a given number of OFDMA symbols 201 and subchannels are included in each slot.

The slot has an associated time (k) and subchannel (s). Each slot can carry one or more OFDMA symbols. The base station partitions the time domain into contiguous frames 210 including a DL subframe 251 and a UL subframe 252. During the DL subframe, all traffic is from the base stations to the mobile stations. During the UL subframe, all traffic is from the mobile stations to the base stations.

The DL subframe starts with a preamble 220 on all subchannels. The preamble enables the mobile stations to perform synchronization and channel estimation. The first subchannel in the first two OFDMA symbols in the downlink is the frame control header (FCH) 202. The FCH is transmitted using QPSK rate 1/2 with four repetitions. The FCH specifies a length of the immediately succeeding downlink MAP (DL-MAP) 260 and the repetition coding used for the DL-MAP.

The BS uses the downlink MAP (DL-MAP) and an uplink MAP (UL-MAP) 261 to notify the MSs of the resources allocated to data bursts 204 in the downlink and uplink direction, respectively, within the current frame. The bursts are associated with connection identifiers (CID). Based upon a schedule received from the BS, each MS can determine when (i.e., OFDMA symbols) and where (i.e., subchannels) the MS should transceive (transmit or receive) with the BS. The first two subchannels 203 in the UL subframe are used for ranging.

A receive/transmit gap (RTG) separates the frames, and a transmit transition gap (TTG) separates the subframes within a frame. This enables the transceivers to switch between transmit and receive modes.

Data signals (OFDMA symbols) are transmitted in bursts 204 comprising one or more slots. Each channel or wireless connection 104 between the BS and the MS is allocated a time domain and frequency domain resource, which contains a two dimensional *block* of slots, i.e., time duration and frequency subchannels. With OFDMA, stations can communicate with each other on the connections 104 by using the allocated two-dimensional resources.

OFDM Symbol

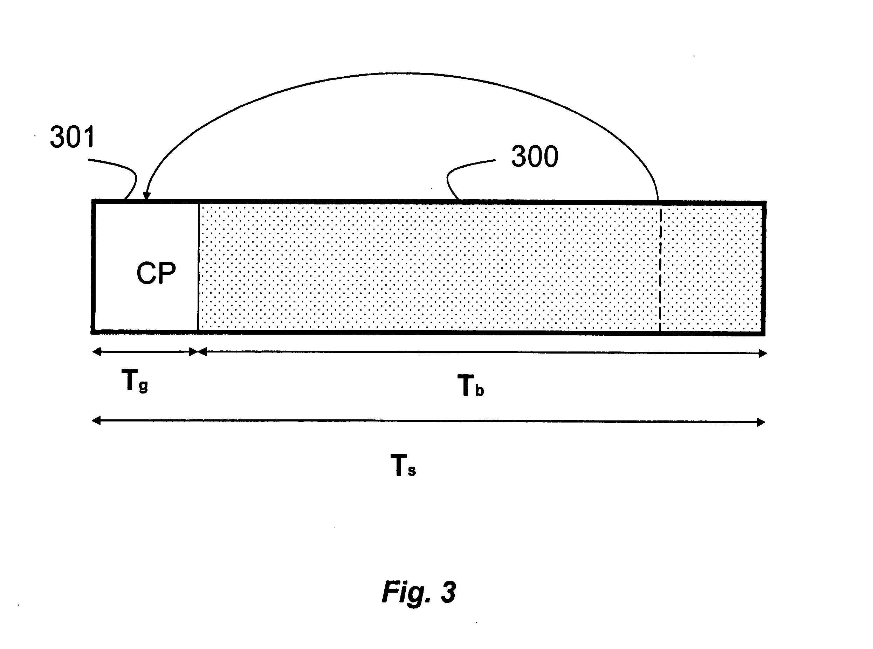

Figure 3 shows a structure of an OFDMA symbol 300, where $T_s$ is the symbol duration, $T_b$ is the information (data) duration and Tg is the cyclic prefix (CP) 301 The CP 301 is derived from the data at the end of $T_b$, which are copied to the beginning of the symbol. $T_g$ is a configurable time period and is approximately a few microseconds long. The subcarriers are generated by a fast Fourier transform (FFT) to construct the complete frequency spectrum. Subcarriers are classified into groups according to different uses, such as DC, data, pilot and guard subcarriers.

The current IEEE 802.16e standard, which uses OFDMA for both downlink and uplink for multiple access, does not support antenna selection at mobile stations.

Antenna Switching

During antenna selection, the mobile station tests which subset of antennas is optimal. In the OFDMA network, a station can switch antennas during the cyclic prefix (CP) period of an OFDMA symbol, and use the selected set of antennas to transmit or receive the OFDMA symbol. The antenna switching is usually completed in tens or hundreds of nanoseconds, while the CP duration is several microseconds. Therefore, the CP prefix is sufficiently long to support antenna switching without any loss of data.

Antenna selection can be performed for transmission, i.e., transmit antenna selection (TAS), or for reception, i.e., receive antenna selection (RAS), or both. For example, in an IEEE 802.16 network, antenna selection can be used at the BS or the MS, or both, in either the downlink or the uplink or both. However, due to cost or complexity considerations, it is usually the MS that has fewer RF chains than antennas.

Under most circumstances, antenna selection is only used when the number of antennas is greater than the number of RF chains. The following description thus focuses on antenna selection for the MS, which essentially refers to TAS in the uplink case and RAS in the downlink case. Nevertheless, the method described below can also apply to the BS.

We will concentrate on the antenna selection for SDMA transmissions, wherein same allocated resource is used for communications between the base station and multiple mobile stations. In this scenario, precoding and scheduling are performed across the multi-user channels, which correlates the antenna selection on one MS with that on other MSs.

The selection can be *locally* or *globally* optimal. Local selection is based only on information available at a particular mobile station. Global selection considers information not only related to the MS where antenna selection occurs, but also that associated with other MSs involved in the same SDMA transmission. Thus, local selection is locally optimal and can be performed directly at the MS, while global selection is globally optimal and can only be performed by the BS.

Channel Reciprocity

The MS can be stationary, nomadic or mobile and can be located at any location in the coverage area of the BS 101. In a time division duplexing (TDD) system, DL and UL subframes share the same frequency band in each frame. The frame duration of the IEEE 802.16 network is of the order of 10 ms, which is typically less than the channel coherence time. Hence, it is reasonable to assume that the UL and DL channels are reciprocal. By reciprocal, we mean that the channel states and qualities are substantially the same on the downlink and the uplink.

When channel reciprocity is assumed, the same subset of antennas is to be used for both uplink transmission and downlink reception by the mobile station. This simplifies the antenna selection for the MS, as the antenna subset selected for the downlink can be directly reused for the uplink, and vice versa. In an actual implementation, the RF chains for upconversion and downconversion in a device might be non-reciprocal. Such a non-reciprocity can be eliminated by appropriate calibration.

Nevertheless, it is not always valid to assume channel reciprocity: even if the channel appears reciprocal, because inter-cell interference is not reciprocal. Moreover, in networks that use frequency division duplexing (FDD), different frequency resources may be allocated to the MS in the downlink and the uplink. Then, the antenna subset selected for one direction may not be the best set for the reverse direction. In this case, it becomes necessary to perform antenna selection separately for the downlink and the uplink.

The adaptive antenna selection method according to embodiments of the invention can accommodate both reciprocal and non-reciprocal channels as described above.

Antenna Selection Method

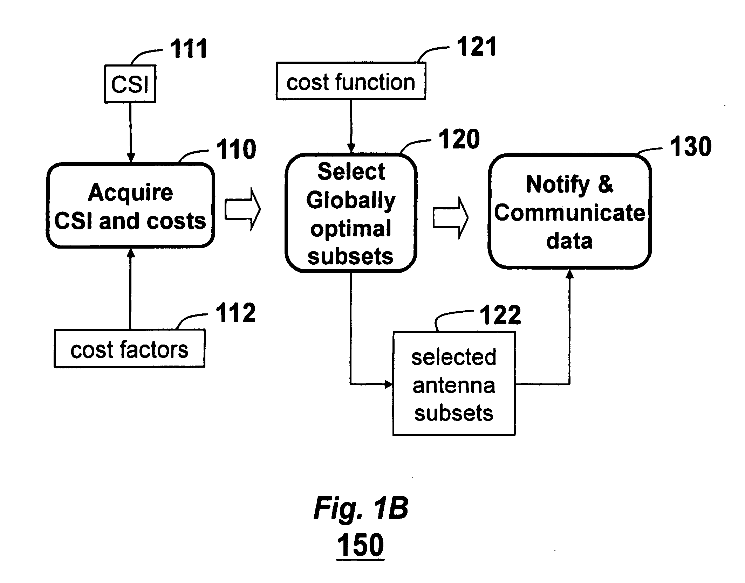

Figure 1B shows the general method for selecting antennas. Channel state information (CSI) 111 is acquired 110 for the channel 104 between each mobile station in the set of mobile stations and the base station. The CSI can be acquired from previously transmitted frames, or on demand. For the one or more designated mobile stations the CSI is acquired for different subsets of the set of antennas available at the designated mobile stations. Cost factors can also be acquired. Cost factors can include the cost of switching antennas, the cost of precoding for a different subset, and other like cost factors.

A globally optimal subsets 122 of the sets of antennas is selected 120 for each designated mobile station based on all of the available CSI 111 for all of the mobile stations, and optionally the cost factors 112. The selection can minimize a cost function. There is one globally optimal subset for each designated mobile station.

Each designated mobile station is notified of the globally optimal subset 122 of the antennas to be used for subsequent communication between the base station and each designated mobile station.

Local and Global Optimizing During Antenna Selection

The optimization can be local or global. Local optimization only considers information available for the mobile station for which an optimal subset of antennas is being selected. Global optimization considers information available for all mobile stations when selecting optimal subsets of antennas.

As shown in Figure 4, the base station determines 410 whether locally optimal selection (LS) 420 or globally optimal selection (GS) 430 should be used. If the selection is locally optimal, the designated mobile station can initiate and perform receive antenna selection by itself in the downlink (i.e., LS DL RAS 421).

In the uplink case, the BS has the CSI of the uplink channel and can decide which antenna set each MS should use. Again, BS can either only consider the uplink channel information when it selects antenna subset for the MS, or it can also take information related to other MSs involved in the same SDMA transmission into consideration for antenna selection decision. The former uplink transmit antenna selection is locally optimal (i.e., LS UL TAS 422).

The IEEE 802.16e standard defines the protocol, MAC message and PHY support for SDMA. Our invention enables antenna selection at the mobile stations that are engaged in SDMA transmission. Based on the selection criteria 111-112, we describe how antenna selection is performed under various scenarios. In addition, we describe MAC signaling protocols to support the antenna selection of our invention.

Local Selection

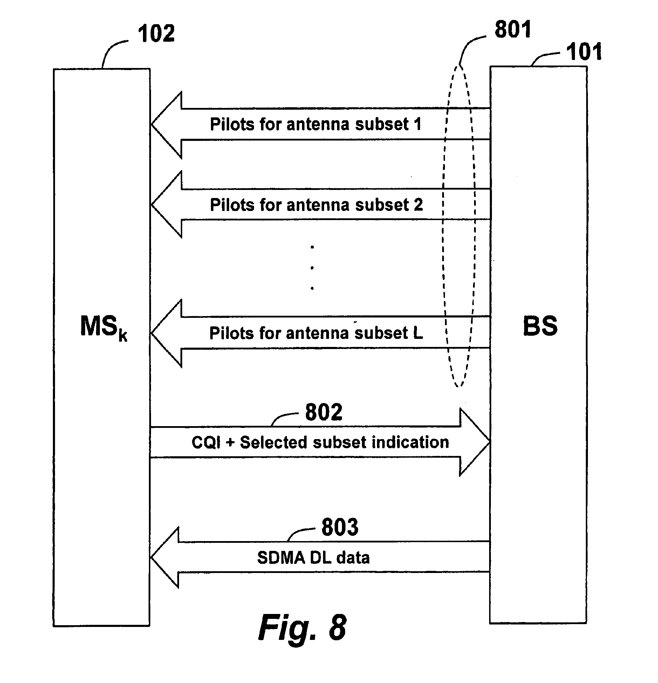

For the locally optimal selection 420 at a designated mobile station (MSs), the antenna selection is based on the CSI between only this MS and the BS. In this case, antenna selection on one MS does not affect the selected antennas on other MSs. That is, stations other than the designated station(s) do not have to switch antennas. The procedure is the same for all of the MSs. Therefore, it is sufficient to describe the local antenna selection for just one MS, say $MS_k$ in Figure 8.

For LS DL RAS 421, once the MS decides to initiate antenna selection, the designated station uses different subsets of antennas to receive different OFDMA symbols that contain pilot subcarriers 801, and estimates the CSI 111 of the channel associated with each different subset of antennas.

As shown in Figure 8, the number of different antenna subsets L 801 is dependent on the number of RF chains N, the number of total antennas M, and the selection process used by the MS. For example, suppose N = 2 and $M$ = 4, the total number of possible antenna subsets $L = \begin{pmatrix} 4 \\ 2 \end{pmatrix} = 6.$

Different from the method described by Tao et al., the MS reports to BS the channel quality information (CQI) 802 associated with the channel between BS and the selected antenna subset at MS. Then, appropriate precoding can be chosen and applied for the SDMA DL data 803 in the subsequent frames.

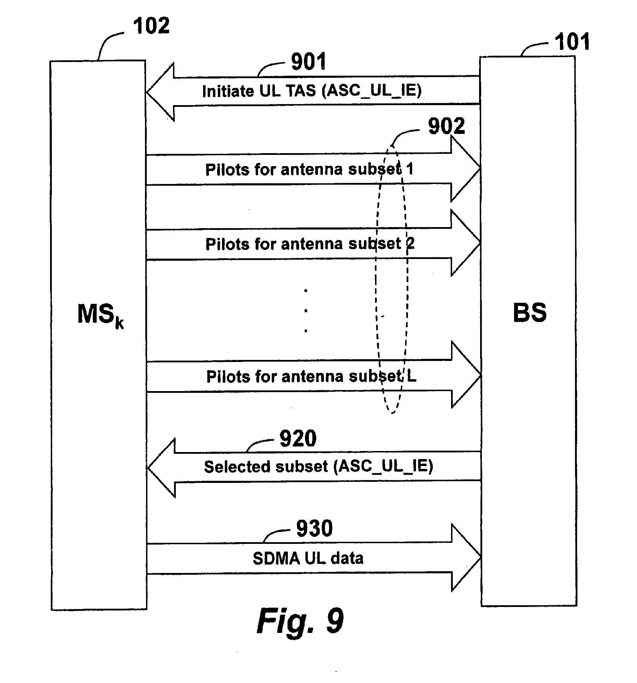

If the channel is reciprocal, the same antenna subset selected for reception on the downlink channel can then be used for transmission on the uplink. Otherwise, when the channel is not reciprocal, the BS transmits an ASC UL IE 901 to MS to initiate the UL TAS process 422, as shown in Figure 9. The ASC_UL_IE is an extended UL-MAP IE to support antenna selection signaling, as shown in Table 1 in the Appendix.

The designated MS transmits pilots 902 using different antenna subsets at different OFDMA symbol to the BS. The BS estimates the channel between it and various antenna subsets at the MS, and selects a subset. The BS then informs MS of this antenna selection result 920.

The manner in which pilot subcarriers are embedded in the allocated resource block has an impact on the antenna switching during the selection process, The pilot subcarrier, also known as the pilot, has different locations in different permutation schemes, e.g., FUSC, PUSC, AMC, TUSC1, TUSC2, etc.

As an example, we describe the PUSC permutation, which is mandatory for UL transmission. Notice that TUSC 1 is an optional permutation mode defined in AAS zone for the 802.16e DL and that the slot structure of TUSC 1 is the same as that for UL PUSC mode.

UL Partially Used Subcarrier (PUSC) mode

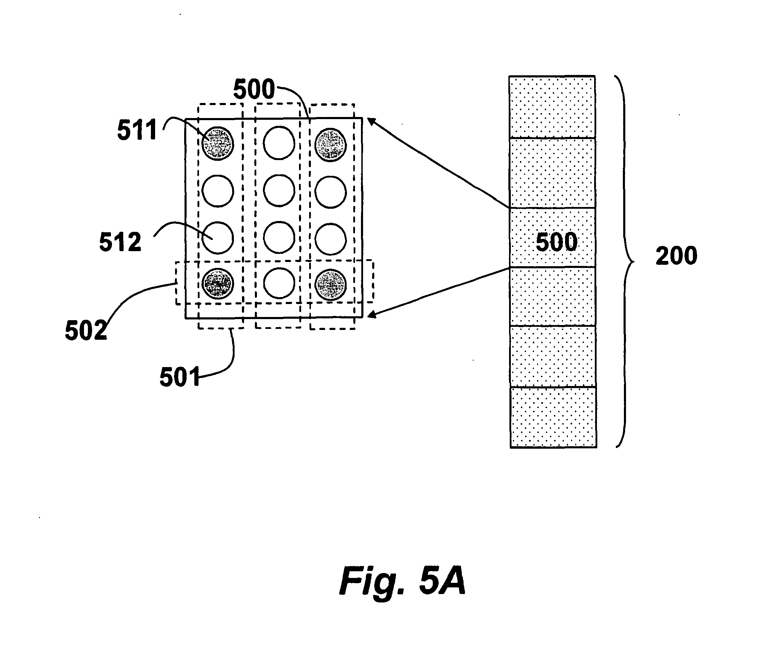

As shown in Figure 5A, UL PUSC is a UL permutation mode specified by the IEEE 802.16e standard. The smallest resource allocation unit is the *slot* 200, which comprises six tiles 500. Each tile comprises three OFDMA symbols 501 and four subcarriers 502. Some of the subcarriers in the OFDMA symbols are pilots 511 and the rest are data 512. Note that not all the OFDMA symbols contain pilot subcarriers.

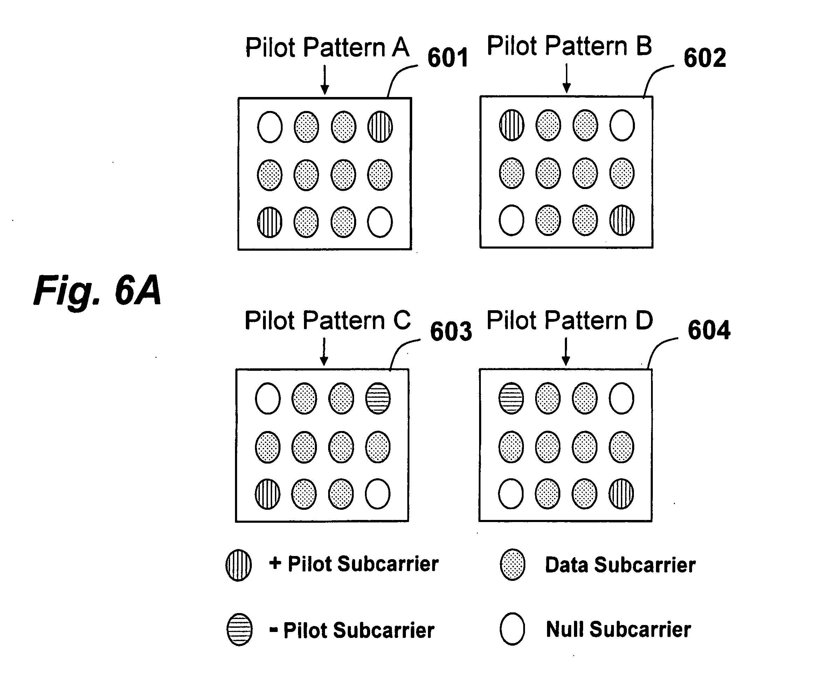

As defined in the Appendix, SDMA system allocates different mobile stations the same time and frequency resource but orthogonal pilot patterns (A-D) 601-604, as shown in Figure 6A. Therefore, the BS can estimate the channels from each MS separately and each MS can perform UL TAS 422 independent of other MSs.

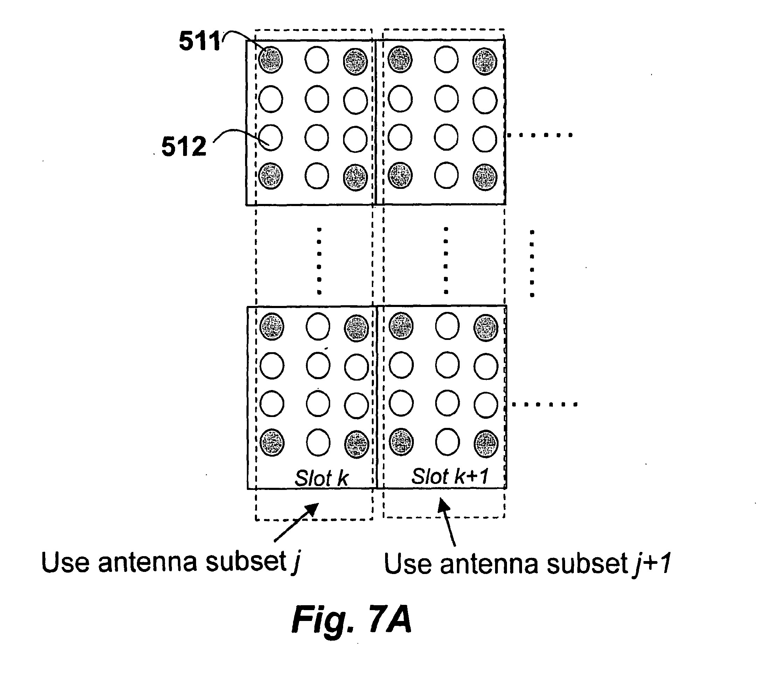

Figure 7A shows how antenna switching occurs in the UL PUSC zone using SDMA. Specifically, the MS transmits slot k using antenna subset j. Because the slot k contains this MS's pilots, which are orthogonal to other MSs', the BS can estimate the channel state of the uplink channel accordingly. Then, the MS switches to antenna subset *j+1* in the next slot, for example in the cyclic prefix of each symbol. Similarly, based on the pilot subcarrier(s) in slot *k+1,* the BS can estimate the uplink channel state when the antenna subset *j+1* is used.

This antenna switching process continues until the MS finishes testing all possible antenna sets, or decides to terminate otherwise. Then, the BS can select the appropriate antenna subset based on the selection criteria (CSI and cost factors) 111-112 such as CSI, SINR or capacity using the cost function 121, and notify 130 MS of the selected antenna subset to the MS. The cost factors can include the cost of switching antennas, precoding and modulation costs, and the like.

DL/UL Adaptive Modulation Coding (AMC) mode

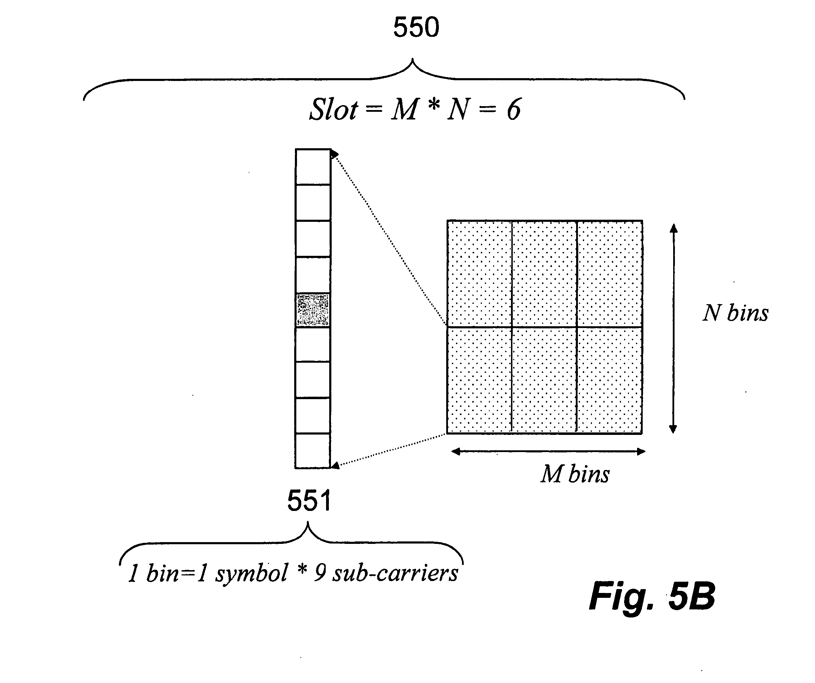

The DL/UL AMC mode is an optional permutation mode for 802.16e. The subcarriers are grouped in each sub-channel and are physically adjacent. The *slot* structure is shown in Figure 5B. Each *slot* 550 consists of 6 bins. Each bin 551 comprises one OFDMA symbol and nine subcarriers. There are four types of AMC modes depending on how six is factorized: 1 x 6, 6 x 1, 2 x 3, and 3 x 2, where the first term denotes time, and the second term denotes frequency.

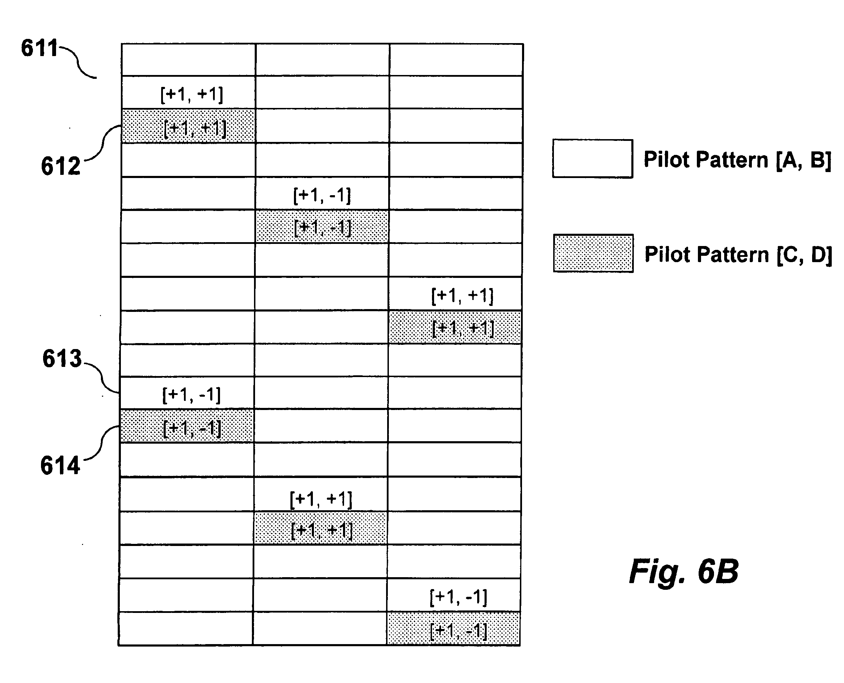

The pilots in an AMC AAS zone are regarded as part of the allocation, and as such are beamformed in a way that is consistent with the transmission of the allocated data subcarriers. In an SDMA region, the pilots of each allocation may correspond to a different pilot pattern, which consists of location and polarity. The pilot patterns 611-614 for a 3 x 2 AMC *slot* 550 are depicted in Figure 6B. Different MSs are allocated with orthogonal pilot patterns to estimate the channel and select antennas.

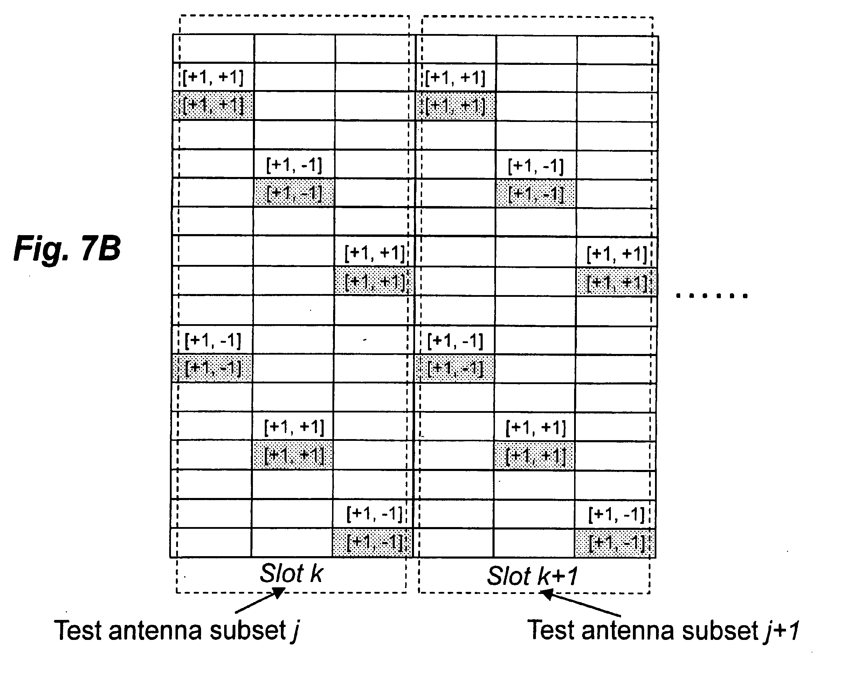

Figure 7B shows antenna switching in a DL AMC zone using SDMA. Specifically, the MS tests antenna subset j using its own pilot pattern during slot *k*, and then switches to test antenna subset *j+1* in the duration of the slot *k+1,* and so on. This antenna switching process continues until the MS finishes testing all possible antenna subsets, and selects the appropriate antenna subset.

Global Selection

For globally optimal antenna selection (GS) 430 as shown in Figure 4, multiple mobile stations use the same resource to transmit in the uplink or receive in the downlink concurrently in the SDMA network. This correlates the communication between the BS and all the MSs engaged in SDMA communications. In globally optimal antenna selection, the antenna selection for each designated MS depends on the channels 104 between all the transceivers in the network. Thus, the local selection and global selection may yield different results.

We describe an example that shows why local selection is not optimal for antenna selection in SDMA. Consider an uplink SDMA between the base station (BS) and two mobile stations (MSs), each mobile station has two antennas and one RF chain. Define $P_1$ ($P_2$) to be $MS_1$ ($MS_2$)'s transmit power, $\mathbf{h}_1$ ($\mathbf{h}_2$) to be the channel vector from $MS_1$ ($MS_2$) to the BS, $\theta(\mathbf{h}_1, \mathbf{h}_2)$ to be the angle between $\mathbf{h}_1$ and $\mathbf{h}_2$, and $N_0$ to be the noise power at the BS.

To select one transmit antenna from each MS, in general, the performance of this SDMA system should be measured by its capacity region as

$$R_1 \leq C_1,\ R_2 \leq C_2,\ \text{and}\ R_1 + R_2 \leq C_{sum},$$

with

$$C_1 = 1/2 \times \log[1 + \|\mathbf{h}_1\|^2 \times P_1/N_0];$$

$$C_2 = 1/2 \times \log[1 + \|\mathbf{h}_2\|^2 \times P_2/N_0];$$

and

$$C_{sum}=1/2\times\log[1+\|\mathbf{h}_1\|^2\times P_1/N_0+\|\mathbf{h}_2\|^2\times P_2/N_0+\|\mathbf{h}_1\|^2\times\|\mathbf{h}_2\|^2\times P_1\times P_2/N_0^2\times sin^2\theta(\mathbf{h}_1, \mathbf{h}_2)],$$

where

$$sin^2\theta(\mathbf{h}_1, \mathbf{h}_2)=1-|\mathbf{h}_1^H\times\mathbf{h}_2|^2/(\|\mathbf{h}_1\|^2\times\|\mathbf{h}_2\|^2),$$

from B. Suard, G. Xu, H. Liu, and T. Kailath, "Uplink Channel Capacity of Space-Division-Multiple-Access Schemes" IEEE Transactions on Information Theory, vol. 44, no. 4, pp. 1468-1476, July 1998. The above can be cost factors to be considered during the optimization for the antenna selection.

Suppose now $MS_1$ has selected the antenna with channel vector $\mathbf{h}_1$, and it is the time to select antenna on $MS_2$. If local selection is used at $MS_2$, the antenna which gives a larger $C_2$, i.e., a larger $\|\mathbf{h}_2\|^2$, is selected.

However, when global selection is used to select an antenna subset for $MS_2$, we should consider not only $C_2$ but also $C_{sum}$. This may result in a different choice of antenna with channel vector $\mathbf{h}'_2$, because although $\|\mathbf{h}_2\|^2>\|\mathbf{h}'_2\|^2$, $\mathbf{h}'_2$ may give a larger $sin^2\theta(\mathbf{h}_1, \mathbf{h}'_2)$ than $sin^2\theta(\mathbf{h}_1, \mathbf{h}_2)$, which could result in a larger $C_{sum}$.

Using global selection in SDMA wireless network, the selection decision 410 is made at the BS, which has access to the measured CSI for all the related channels 104.

The uplink transmit antenna selection is normally initiated (triggered) by the BS. The MSs use different antenna subsets to transmit pilots for the BS to acquire the CSI for each antenna subset and the BS. After the BS collects the CSI from all MSs, global optimal criteria can be used to select antenna sets for each MS.

For the downlink, both MS and BS can initiate the DL receive antenna selection. Each MS measures the CSI between the BS and different antenna subsets, and feeds back the CSI to the BS. Again, the decision of which antenna subset to use is made by the BS, after globally considering the CSI from all MSs.

We next describe the global antenna selection for SDMA in a WiMAX network.

WiMAX Implementation

For the uplink 432, the base station directs a designated MS to perform global antenna selection by transmitting the ASC UL IE 901. In response, the designated MS transmits the OFDMA symbol with pilots using the different antenna subsets 902. The BS estimates the CQI from the MS, and determines an antenna subset that is globally optimal for the network. The BS indicates the selection in the ASC UL IE 920, which can be used for subsequent data transmissions 930.

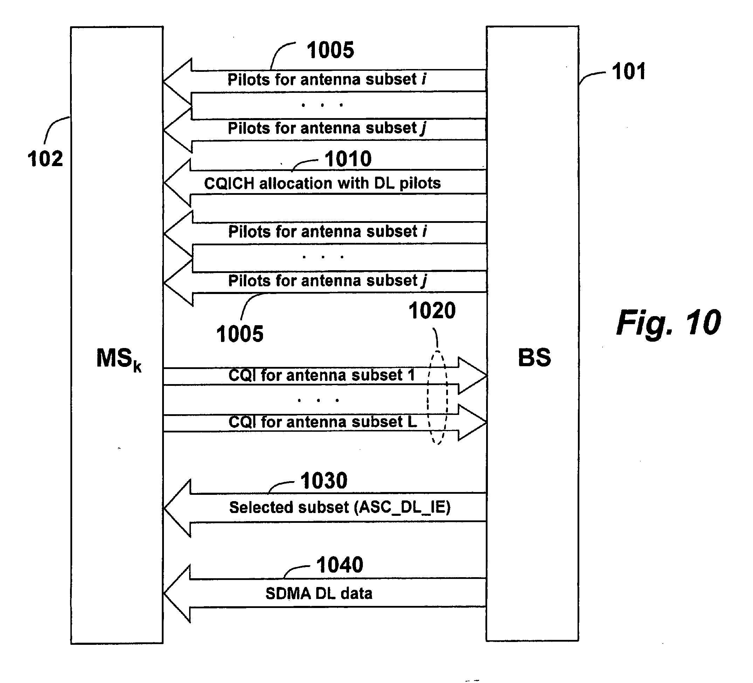

Figure 10 shows the GS downlink RAS procedure 431 initiated by BS. A CQICH allocation 1010 can be made with AAS_SDMA_DL_IE, or through the CQICH_Allocation_IE, or through the CQICH_Control_IE. The downlink pilots 1005 are transmitted with the IE under different pilot patterns.

It is also possible that the BS sends additional pilot(s) 1005 prior to the CQICH allocation IE or after the CQICH allocation IE, in case the pilots in the CQICH allocation IE are not sufficient for MS to complete testing all its antenna sets.

Based upon the CQI report 1020 received from the MS, BS can select the subset of antennas for MS to use in downlink for reception 1040. BS indicates the selected antenna set in ASC_DL_IE 1030 to MS.

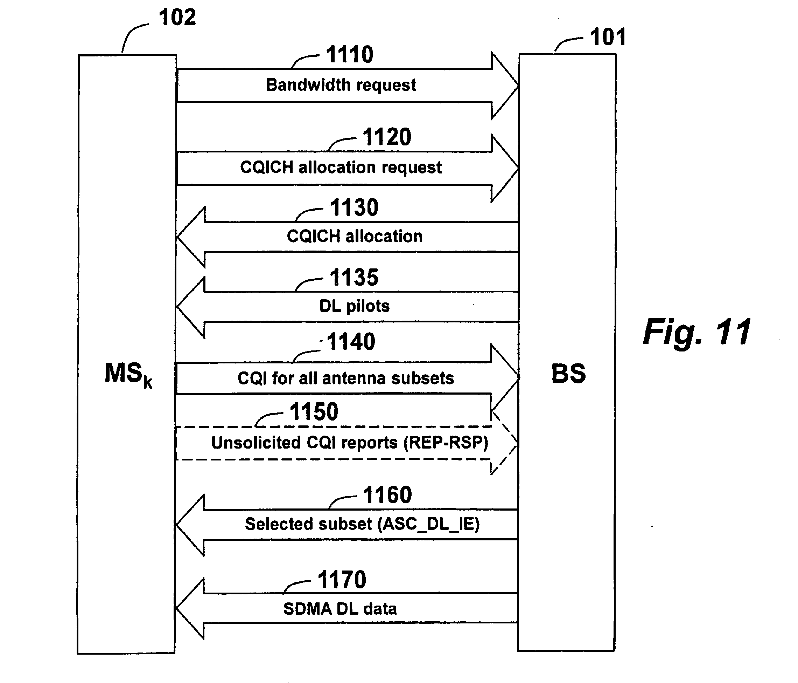

Figure 11 shows the procedure for MS initiated GS DL RAS 431. The downlink RAS procedure 431 sometimes should be initiated by MS, for example, if the latest CQI report sent to the BS is no longer up-to-date while the next periodic CQI feedback opportunity is still far away.

In this case, $MS_k$ 102 can initiate the downlink receive antenna selection 431, and request 1110 bandwidth from BS 101 by sending a CQICH allocation request 1120. In order to send CQICH allocation request, however, the MS has to first acquire proper uplink resource. MS can use various bandwidth request (BR) schemes and contention-resolution protocol defined in current IEEE 802.16 standard to acquire such uplink resource. The MS then can use the allocated uplink bandwidth to request a CQICH allocation, if the MS does not have a CQICH and its current subset of antennas in use do not give a satisfactory performance. The BS 102 allocates the CQICH to the MS 1130, and transmits 1135 the pilot signals in the DL. The MS receives the pilot signals using different subset of antennas, and estimates the DL channel associated with each antenna subset based upon the pilot. The MS informs 1140 the BS of the CQI for the channel associated with each antenna subset.

At some time, the CQICH has been allocated to the MS, but the last CQI report of the MS is no longer appropriate for the duration remaining until the next periodic CQI feedback. In this case, the MS can transmit the unsolicited CQI report 1150 to BS through a REP-RSP message. The MS ensures in advance that there is enough bandwidth for the REP-RSP message. Otherwise, the MS performs contention-based BR first.

As long as BS obtains the CQI from MS, either through CQICH or REP-RSP, the BS can select the appropriate subset of antennas for the MS by taking into account other MSs' CQI, which is stored at the BS.

The BS notifies the MSs by transmitting the ASC DL IE 1160 to each MS before SDMA downlink transmission 1170. The ASC_DL_IE is an extended DL-MAP IE to support antenna selection signaling, as shown in Table 2 in the Appendix, where each field has a similar meaning to the corresponding field in Table 1 in the Appendix.

As a side note, after receiving the unsolicited CQI report 1150 from an MS, the BS can modify the Period (p) in the CQICH according to MS's request. Also the BS can disable the "triggered update" in the CQICH_Allocation_IE for a period of time so that the MS cannot transmit unsolicited CQI update.

Additional Issues

The antenna selection method described above should take care of some other issues when the invention is implemented in an SDMA network.

First, to perform precoding and antenna selection in an SDMA network, the BS needs to have a period update of all the CQI and response to the unsolicited CQI report from any MS. As a consequence, the BS stores the most currently acquired CQI for each MS and updates whenever there is a pilot or CQI feedback transmitted from some MS, and whenever a new decision is made on antenna selection.

Second, during SDMA communication in a wireless network, there may be some network update due to re-grouping of the users, reallocation of the resources, mobility and handover of some users, and the change of traffic demand. Any update can initiate antenna selection at the mobile stations. To avoid too many CQI exchanges (which may be redundant) between MSs and BS, the BS may use the stored CSI to precode and select antennas at the MSs after an update. Antenna switching can be performed later when the configuration of network stabilizes.

Third, the MSs and the BS agree on the type of CQI feedback for each antenna subset. The CQI feedback type includes the channel matrix, average carrier-to-interference-and-noise ratio (CINR) and the maximum CINR. The BS needs the entire channel matrix to perform beam forming, and the average CINR to select the antenna subsets. The MS can select the antennas locally and feed back the maximum CINR to the BS.

Notification

Before the designated MS performs transmit or receive antenna selection, the MS informs the BS of its capability of supporting such functionality by exchanging Subscriber Station Basic Capability Request (SBC-REQ) and SS Basic Capability Response (SBC-RSP) messages with the BS.

Specifically, when the designated MS performs initialization and joins the network, the MS transmits an SS Basic Capability Request (SBC-REQ) message to indicate to the BS that the MS can perform antenna selection in SDMA, with the TLV Encoded Information shown in Table 3 in the Appendix.

In addition, MS can inform the BS of the number of possible antenna set combinations the MS tests. Therefore, we define two new TLVs in Tables 4 and 5 in the Appendix to support this signaling. By knowing the number of sets that are tested, the BS can signal the index to the order in which the sets are tested to indicate the best set by ASC IE.

When MS transmits unsolicited CQI report, indication of the corresponding antenna set should be notified to the BS. Therefore, we define a new TLV in Table 6 in the Appendix to support this signaling.

After BS receives the unsolicited report from MS, the BS indicates the action performed upon receiving this kind of trigger, which makes the update of the Type/function/action description of Trigger TLV, as shown in Table 7 in the Appendix.

Recall that we have defined the Antenna_Selection_Control_UL_IE and Antenna_Selection_Control_DL_IE in Extended-2 UIUC and Extended-2 DIUC codes respectively. So the Extended-2 UIUC and Extended-2 DIUC code assignments are updated as shown in Tables 8 and 9 in the Appendix.

Although the invention has been described by way of examples of preferred embodiments, it is to be understood that various other adaptations and modifications may be made within the scope of the invention. Therefore, it is the object of the appended claims to cover all such variations and modifications as come within the scope of the invention.

**Appendix**

**Terms and Definitions**

Slot: A slot is the minimum resource unit allocated to an MS in the UL and the DL. A slot is two-dimensional and is measured in time duration and frequency subchannels.

**Zone**: A zone is one or more (time-wise) contiguous columns of symbols.

**Data Region:** In OFDMA, a data region is a two-dimensional allocation of a group of contiguous subchannels, in a group of contiguous OFDMA symbols. A two-dimensional allocation of a data region may be visualized as a rectangle, such as the $4 \times 3$ rectangle of subchannels and symbols.

**AAS zone:** Adaptive antenna system (AAS) is an optional feature for a network designed according to the IEEE 802.16 standard. AAS uses multiple antennas to improve system coverage and capacity by directing transmitted signals at specific receiving antennas. AAS can 'steer' RF beams spatially, which increases spectral reuse and diversity gain. The AAS zone is a period of time that is dedicated for AAS-supported MSs during each frame.

**STC zone:** Space-time coding (STC) is an optional feature for an IEEE 802.16 network and is defined in the standards. STC uses multiple transmit antennas to improve the reliability of data transmission in wireless communication systems. STC transmits multiple, redundant copies of a data stream to the receiver to increase the probability of reliable decoding. The STC zone is a period of time that is dedicated for STC-supported MSs during each frame.

**Permutation Zone:** A permutation zone is a number of contiguous OFDMA symbols in the DL or the UL. A permutation zone can include multiple MSs that use the same permutation formula. Both the UL subframe and the DL subframe can include more than one permutation zones.

**Pilot Patterns:** A pilot pattern is an allocation of pilot subchannels. In multi-user communications, e.g., transmission from BS to multiple MSs in the downlink as in SDMA, a receiver estimates the channel using orthogonal pilot patterns.

**Table 1- Antenna Selection Control UL IE**

| Syntax | Size (bit) | Notes |
|---|---|---|
| **_Antenna_Selection_Control_UL_IE( ){_** | - | - |
| Extended-2 UIUC | 4 | Antenna_Selection_Control_UL_IE = 0x0D |
| Length | 4 | Length = 0x01 |
| UL_AS_Indication | 1 | Indicates whether the mobile station performs uplink transmit antenna selection in the current frame. |
| UL_AS_Selection | 7 | The value of this field indicates which antenna set is selected by the MS for uplink transmission. |
| } | | |

**Table 2 - Antenna Selection Control DL IE**

| Syntax | Size (bit) | Notes |
|---|---|---|
| **_Antenna_Selection_Control_DL_IE( ){_** | - | - |
| Extended-2 DIUC | 4 | Antenna_Selection_Control_DL_IE =0x0D |
| Length | 4 | Length =0x01 |
| DL_AS_Indication | 1 | Indicates whether mobile station performs downlink receive antenna selection in the current frame. |
| DL_AS_Selection | 7 | The value of this field indicates which antenna set is chosen by the MS for downlink transmission. |
| } | | |

**Table 3 - SDMA Pilot capability**

| Type | Length | Value | Scope |
|---|---|---|---|
| 178 | 1 | Bits        0-1: SDMA pilot pattern support for | SBC-REQ, |

(continued)

| Type | Length | Value | | Scope |
|------|--------|-------|--|-------|
| | | AMC zone: | | SBC-RSP |
| | | 0b00 - No support | | |
| | | 0b01 - Support SDMA pilot patterns #A and #B | | |
| | | 0b 11 - Support all SDMA pilot patterns | | |
| | | 0b 10 - *Reserved* | | |
| | | ***Bits 2:*** | ***uplink MS transmit antenna selection in SDMA supported when set to 1*** | |
| | | ***Bits 3:*** | ***downlink MS receive antenna selection in SDMA supported when set to 1*** | |
| | | Bits 4-7: *Reserved* | | |

**Table 4 - SDMA MS Antenna Selection Uplink Support**

| Type | Length | Value | Scope |
|------|--------|-------|-------|
| 203 | 1 | ***Indicate the number of antenna set combinations the uplink MS transmit antenna selection will test*** | SBC-REQ, SBC-RSP |

**Table 5 - SDMA MS Antenna Selection Downlink Support**

| Type | Length | Value | Scope |
|------|--------|-------|-------|
| 204 | 1 | ***Indicate the number of antenna set combinations the downlink MS receive antenna selection will test*** | SBC-REQ, SBC-RSP |

**Table 6 - SDMA MS Antenna Selection Report**

| Type | Length | Value | Scope |
|------|--------|-------|-------|
| 205 | 1 | ***Indicate the index of the antenna set combination for the unsolicited CQI report*** | REP-REQ, REP-RSP |

**Table 7 - Trigger; Type/function/action description**

| Name | Length (bit) | Value |
|------|--------------|-------|
| Type | 2 (MSB) | Trigger metric type: 0x0: CINR metric, 0x1: RSSI metric, 0x2: RTD metric, 0x3: Reserved |
| Function | 3 | Computation defining trigger condition: 0x0: Reserved 0x1: Metric of neighbor BS is greater than absolute value 0x2: Metric of neighbor BS is less than absolute value 0x3: Metric of neighbor BS is greater than serving BS metric by relative value 0x4: Metric of neighbor BS is less than serving BS metric by relative value |

(continued)

| Name | Length (bit) | Value |
|------|--------------|-------|
| | | 0x5: Metric of serving BS greater than absolute value |
| | | 0x6: Metric of serving BS less than absolute value |
| | | 0x7: Reserved |
| | | NOTE-0x1-0x4 not applicable for RTD trigger metric |
| Action | 3 (LSB) | Action performed upon reaching trigger condition: |
| | | 0x0: Reserved |
| | | 0x1: Respond on trigger with MOB_SCN-REP after the end of each scanning interval |
| | | 0x2: Respond on trigger with MOB_MSHO-REQ |
| | | 0x3: On trigger, MS starts neighbor BS scanning process by transmitting MOB_SCN-REQ |
| | | ***0x4: Respond on triggered update with unsolicited REP-REQ/RSP*** |
| | | 0x5-0x7: Reserved |
| | | NOTE-0x3 is not applicable when neighbor BS metrics are defined (i.e., only Function values 0x5 or 0x6 are applicable). |

**Table 8 - Extended-2 UIUC code assignment for UIUC =11**

| Extend-2 DIUC | Usage |
|---------------|-------|
| 00 | CQICH Enhanced Allocation IE |
| 01 | HO Anchor Active UL-MAP IE |
| 02 | HO Active Anchor UL-MAP IE |
| 03 | Anchor BS Switch IE |
| 04 | UL Sounding Command IE |
| 05 | *Reserved* |
| 06 | MIMO UL Enhanced IE |
| 07 | HARQ UL MAP IE |
| 08 | HARQ ACKCH Region Allocation IE |
| 09-0C | *Reserved* |
| ***0D*** | ***Antenna Selection Control UL IE*** |
| 0E | AAS SDMA UL IE |
| 0F | Feedback Polling IE |

**Table 9 - Extended-2 DIUC code assignment for DIUC=14**

| Extend-2 DIUC | Usage |
|---------------|-------|
| 00 | MBS MAP IE |
| 01 | HO Anchor Active DL MAP IE |

(continued)

| Extend-2 DIUC | Usage |
|---|---|
| 02 | HO Active Anchor DL MAP IE |
| 03 | HO CID Translation MAP IE |
| 04 | MIMO in Anchor BS IE |
| 05 | Macro-MIMO DL Basic IE |
| 06 | Skip IE |
| 07 | HARQ DL MAP IE |
| 08 | HARQ ACK IE |
| 09 | Enhanced DL MAP IE |
| 0A | Closed-loop MIMO DL Enhanced IE |
| 0B-0C | *Reserved* |
| *0D* | ***Antenna Selection Control DL IE*** |
| 0E | AAS SDMA DL IE |
| 0F | *Reserved* |

**Claims**

1. A method for selecting antennas in a spatial division multiple access (SDMA) wireless network including a base station (101) and a set of mobile stations (102), in which the set of mobile stations includes one or more designated mobile stations, and in which each designated mobile station has a set of multiple antennas, comprising:

   acquiring (110) channel state information (CSI) for a channel between each mobile station in the set of mobile stations and the base station, **characterized in that** the CSI for each designated mobile station is acquired for different subsets of the set of multiple antennas at each designated mobile station; and further comprizing the steps of:
   selecting (120), for each designated mobile station a globally optimal subset of the set of antennas based on the CSI acquired from all the mobile stations; and
   notifying (130) each designated mobile station of the globally optimal subset of the antennas to be used for subsequent communication between the base station and each designated mobile station.

2. The method of claim 1, in which the selecting minimizes a cost function based on the CSI and cost factors.

3. The method of claim 1, further comprising:

   exchanging messages between the base station and each designated mobile station to negotiate:

      a capability of supporting antenna selection at the designated mobile station using SDMA; and
      a number of the different subsets of the sets of antennas.

4. The method of claim 1, in which each channel includes a downlink and an uplink, and mobile station reports to the base station in the uplink the CSI it collected in the downlink, and the base station acquires the CSI for the uplink.

5. The method of claim 4, in which the bases station decides whether the downlink and the uplink are reciprocal, and whether a quality of the downlink and the uplink is acceptable for the subsequent communication.

6. The method of claim 4, in which the globally optimal subset of the antennas is for receiving on the downlink.

7. The method of claim 4, in which the globally optimal subset of the antennas is for transmitting on the uplink.

**8.** The method of claim 1, further comprising:

initiating antenna selection at the base station.

**9.** The method of claim 1, further comprising:

initiating the antenna selection at the designated mobile station.

**10.** The method of claim 1, further comprising:

allocating a channel quality information channel (CQICH) to each designated mobile station;
transmitting, by the base station, orthogonal pilots to each designated mobile station; and
transmitting, by each designated mobile station, CQI of the different subsets of the set of antennas on the CQICH.

**11.** The method of claim 10, further comprising:

transmitting an unsolicited CQI report for the different subsets of the set of antennas; and
indicating, by the base station, a best set of receive antennas for the mobile station before the next frame of
SDMA downlink transmission.

**12.** The method of claim 11, further comprising:

requesting bandwidth from the base station to transmit the unsolicited CQI report; and
transmitting the CQI report through the CQICH or an unsolicited REP-RSP message if request is successful.

**13.** The method of claim 11, further comprising:

requesting the CQICH using a CQICH allocation request header.


**Patentansprüche**

**1.** Verfahren zur Auswahl von Antennen in einem drahtlosen Netz mit Raummultiplex-Mehrfachzugriff (SDMA), enthaltend eine Basisstation (101) und einen Satz aus mobilen Stationen (102), wobei der Satz aus mobilen Stationen
eine oder mehrere bestimmte mobile Stationen enthält und wobei jede bestimmte mobile Station einen Satz aus
mehreren Antennen hat, aufweisend:

Erfassen (110) von Kanalzustandsinformationen (CSI) für einen Kanal zwischen jeder mobilen Station in dem
Satz aus mobilen Stationen und der Basisstation,
**dadurch gekennzeichnet,**
**dass** die CSI für jede bestimmte mobile Station für verschiedene Subsätze des Satzes aus mehreren Antennen
bei jeder bestimmten mobilen Station erfasst werden; und weiterhin aufweisend die Schritte:

Auswählen (120) eines global optimalen Subsatzes des Satzes aus Antennen auf der Grundlage der von
allen mobilen Stationen erfassten CSI für jede bestimmte mobile Station; und
Benachrichtigen (130) jeder bestimmten mobilen Station über den global optimalen Subsatz der Antennen,
der für eine nachfolgende Kommunikation zwischen der Basisstation und jeder bestimmten mobilen Station
zu verwenden ist.

**2.** Verfahren nach Anspruch 1, bei dem die Auswahl eine Kostenfunktion basierend auf den CSI und Kostenfaktoren
minimiert.

**3.** Verfahren nach Anspruch 1, weiterhin aufweisend: Austauschen von Nachrichten zwischen der Basisstation und
jeder bestimmten mobilen Station zum Verhandeln:

einer Fähigkeit zum Unterstützen der Antennenauswahl bei der bestimmten mobilen Station unter Verwendung
von SDMA; und
einer Anzahl der verschiedenen Subsätze der Sätze aus Antennen.

4. Verfahren nach Anspruch 1, bei dem jeder Kanal eine Abwärtsverbindung und eine Aufwärtsverbindung enthält, und die mobile Station der Basisstation in der Aufwärtsverbindung die CSI mitteilt, die sie in der Abwärtsverbindung gesammelt hat, und die Basisstation die CSI für die Aufwärtsverbindung erfasst.

5. Verfahren nach Anspruch 4, bei dem die Basisstation entscheidet, ob die Abwärtsverbindung und die Aufwärtsverbindung reziprok sind, und ob eine Qualität der Abwärtsverbindung und der Aufwärtsverbindung für die nachfolgende Kommunikation annehmbar ist.

6. Verfahren nach Anspruch 4, bei dem der global optimale Subsatz der Antennen für den Empfang bei der Abwärtsverbindung ist.

7. Verfahren nach Anspruch 4, bei dem der global optimale Subsatz der Antennen für das Senden bei der Aufwärtsverbindung ist.

8. Verfahren nach Anspruch 1, weiterhin aufweisend:

   Initiieren der Antennenauswahl bei der Basisstation.

9. Verfahren nach Anspruch 1, weiterhin aufweisend:

   Initiieren der Antennenauswahl bei der bestimmten mobilen Station.

10. Verfahren nach Anspruch 1, weiterhin aufweisend:

    Zuweisen eines Kanalqualitätsinformations-Kanals (CQICH) zu jeder bestimmten mobilen Station;
    Senden von orthogonalen Pilotsignalen zu jeder bestimmten mobilen Station durch die Basisstation; und
    Senden von CQI der verschiedenen Subsätze des Satzes aus Antennen durch jede bestimmte mobile Station über den CQICH.

11. Verfahren nach Anspruch 10, weiterhin aufweisend:

    Senden einer unaufgeforderten CQI-Mitteilung für die verschiedenen Subsätze des Satzes aus Antennen; und
    Anzeigen eines besten Satzes aus Empfangsantennen für die mobile Station vor dem nächsten Rahmen der SDMA-Abwärtsverbindungsübertragung durch die Basisstation.

12. Verfahren nach Anspruch 11, weiterhin aufweisend:

    Anfordern einer Bandbreite von der Basisstation, um die unaufgeforderte CQI-Mitteilung zu senden; und
    Senden der CQI-Mitteilung über den CQICH oder einer unaufgeforderten REP-RSP-Nachricht, wenn die Anforderung erfolgreich ist.

13. Verfahren nach Anspruch 11, weiterhin aufweisend:

    Anfordern des CQICH durch Verwendung eines CQICH-Zuweisungsanforderungsvorsatzes.

**Revendications**

1. Procédé destiné à sélectionner des antennes dans un réseau sans fil à accès multiple par répartition spatiale (SDMA) qui comprend une station de base (101) et un ensemble de stations mobiles (102) dans lequel l'ensemble de stations mobiles comprend une ou plusieurs stations mobiles désignées, et dans lequel chaque station mobile désignée présente un ensemble d'antennes multiples, comprenant l'étape consistant à :

   acquérir (110) des informations d'état de canal (CSI) d'un canal entre chaque station mobile dans l'ensemble de stations mobiles et la station de base, **caractérisé en ce que** les CSI de chaque station mobile désignée sont acquises pour différents sous-ensembles de l'ensemble d'antennes multiples au niveau de chaque station mobile désignée ;
   et comprenant en outre les étapes consistant à :

sélectionner (120) pour chaque station mobile désignée un sous-ensemble globalement optimal de l'ensemble d'antennes sur la base des CSI acquises à partir de toutes les stations mobiles ; et

avertir (130) chaque station mobile désignée du sous-ensemble globalement optimal des antennes à utiliser pour une communication ultérieure entre la station de base et chaque station mobile désignée.

2. Procédé selon la revendication 1, dans lequel l'étape de sélection permet de réduire au minimum une fonction de coût sur la base des CSI et des facteurs de coût.

3. Procédé selon la revendication 1, comprenant en outre une étape consistant à :

échanger des messages entre la station de base et chaque station mobile désignée de façon à négocier :

une capacité de prendre en charge la sélection d'antennes au niveau de la station mobile désignée utilisant le SDMA ; et
un certain nombre de sous-ensembles différents des ensembles d'antennes.

4. Procédé selon la revendication 1, dans lequel chaque canal comprend une liaison descendante et une liaison montante, et la station mobile signale à la station de base dans la liaison montante les CSI qu'elle a collectées dans la liaison descendante, et la station de base acquiert les CSI de la liaison montante.

5. Procédé selon la revendication 4, dans lequel la station de bases décide si la liaison descendante et la liaison montante sont réciproques, et si la qualité de la liaison descendante et celle de la liaison montante sont acceptables pour la communication ultérieure.

6. Procédé selon la revendication 4, dans lequel le sous-ensemble globalement optimal des antennes sert à recevoir sur la liaison descendante.

7. Procédé selon la revendication 4, dans lequel le sous-ensemble globalement optimal des antennes sert à émettre sur la liaison montante.

8. Procédé selon la revendication 1, comprenant en outre une étape consistant à:

lancer la sélection d'antenne au niveau de la station de base.

9. Procédé selon la revendication 1, comprenant en outre une étape consistant à :

lancer la sélection d'antenne au niveau de la station mobile désignée.

10. Procédé selon la revendication 1, comprenant en outre les étapes consistant à:

attribuer un canal d'informations de qualité de canal (CQICH) à chaque station mobile désignée ;
faire émettre, par la station de base, des pilotes orthogonaux vers chaque station mobile désignée ; et
faire émettre, par chaque station mobile désignée, les CQI des différents sous-ensembles de l'ensemble d'antennes sur le CQICH.

11. Procédé selon la revendication 10, comprenant en outre les étapes consistant à :

émettre un rapport des CQI non sollicitées des différents sous-ensembles de l'ensemble d'antennes ; et
faire indiquer, par la station de base, le meilleur ensemble d'antennes de réception de la station mobile avant la prochaine trame de transmission de liaison descendante SDMA.

12. Procédé selon la revendication 11, comprenant en outre les étapes consistant à :

demander une largeur de bande de la part de la station de base de façon à émettre le rapport de CQI non sollicitées ; et
émettre le rapport de CQI par l'intermédiaire du CQICH ou un message REP - RSP non sollicité si la demande est couronnée de succès.

**13.** Procédé selon la revendication 11, comprenant en outre une étape consistant à :

demander le CQICH en utilisant un en-tête de demande d'attribution de CQICH.

Fig. 1A
100

*Fig. 1B*
**150**

**Fig. 2**

EP 2 218 194 B1

*Fig. 3*

EP 2 218 194 B1

**Fig. 4**

EP 2 218 194 B1

*Fig. 5A*

Fig. 5B

550

$Slot = M * N = 6$

N bins

M bins

551

1 bin=1 symbol * 9 sub-carriers

Fig. 6A

EP 2 218 194 B1

Fig. 6B

Use antenna subset *j*          Use antenna subset *j+1*

*Fig. 7A*

EP 2 218 194 B1

**Fig. 7B**

|  |  |  |  |  |  |
|---|---|---|---|---|---|
| [+1, +1] |  |  | [+1, +1] |  |  |
| [+1, +1] |  |  | [+1, +1] |  |  |
|  |  |  |  |  |  |
|  | [+1, -1] |  |  | [+1, -1] |  |
|  | [+1, -1] |  |  | [+1, -1] |  |
|  |  |  |  |  |  |
|  |  | [+1, +1] |  |  | [+1, +1] |
|  |  | [+1, +1] |  |  | [+1, +1] |
|  |  |  |  |  |  |
| [+1, -1] |  | · | [+1, -1] |  |  |
| [+1, -1] |  |  | [+1, -1] |  |  |
|  |  |  |  |  |  |
|  | [+1, +1] |  |  | [+1, +1] |  |
|  | [+1, +1] |  |  | [+1, +1] |  |
|  |  |  |  |  |  |
|  |  | [+1, -1] |  |  | [+1, -1] |
|  |  | [+1, -1] |  |  | [+1, -1] |

······

*Slot k*   *Slot k+1*

Test antenna subset *j*   Test antenna subset *j+1*

EP 2 218 194 B1

*Fig. 8*

BS

101

902

901 Initiate UL TAS (ASC_UL_IE)

Pilots for antenna subset 1

Pilots for antenna subset 2

· · ·

Pilots for antenna subset L

920 Selected subset (ASC_UL_IE)

930 SDMA UL data

102

MS$_k$

*Fig. 9*

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 777356 A
- US 20090016312 A1
- US SN11777356 A
- WO 02093819 A
- US 20070224943 A

**Non-patent literature cited in the description**

- **B. Suard ; G. Xu ; H. Liu ; T. Kailath.** Uplink Channel Capacity of Space-Division-Multiple-Access Schemes. *IEEE Transactions on Information Theory,* July 1998, vol. 44 (4), 1468-1476